# EUROPÄISCHE PATENTSCHRIFT

(11) **EP 3 214 789 B1**
(45) Veröffentlichungstag und Bekanntmachung des Hinweises auf die Patenterteilung: **13.08.2025**
(21) Anmeldenummer: 17157751.3
(22) Anmeldetag: 24.02.2017
(51) Int. Cl.: H04L 1/18, H04L 1/00, H04W 4/00, H04W 84/18, H04L 1/1812, H04W 4/38, H04L 7/04, H04L 5/00

(54) **VERFAHREN UND VORRICHTUNG ZUR FUNKÜBERTRAGUNG VON DATEN**
DATA TRANSMISSION METHOD AND APPARATUS
METHODE ET APPAREIL DE TRANSMISSION DE DONNÉES

(30) Priorität: 02.03.2016 DE 102016103709
(43) Veröffentlichungstag der Anmeldung: 06.09.2017
(73) Patentinhaber: Techem Energy Services GmbH, 65760 Eschborn (DE)
(72) Erfinder: Kähler, Arne, 61350 Bad Homburg (DE); Wurl, Andreas, 61462 Königstein (DE); Simon, Winfried, 64579 Gernsheim (DE); Borgstedt, Reiner, 65843 Sulzbach (DE); Gutmann, Norbert, 64295 Darmstadt (DE)
(74) Vertreter: Keil & Schaafhausen Patentanwälte PartGmbB

(56) Entgegenhaltungen:
- WO-A1-2015/074666
- US-A1- 2014 126 580

## Beschreibung

Die Erfindung betrifft ein Verfahren zur Funkübertragung von Daten gemäß dem Oberbegriff des Anspruchs 1 und zur Durchführung des Verfahrens eingerichtete Vorrichtungen nach Anspruch 8. Bei dem Verfahren werden die Daten in einem standardkonformen Telegramm entsprechend einem definierten Standard versendet und/oder empfangen, das einem Standard entspricht. Die Daten werden also mittels eines standardkonformen Telegramms ausgetauscht, wobei der Standard ggf. kein Fehlerkorrekturverfahren, aber einen herstellerspezifischen oder proprietären Bereich im Telegramm vorsieht. Unter dem definierten Standard werden Protokolle für die Funkübertagung einschließlich der Festlegung der Telegramme verstanden, bspw. im Rahmen des OSI-Schichtenmodells.

Der Ablesevorgang von Verbrauchswerten aus Verbrauchserfassungsgeräten, wie beispielsweise Heizkostenverteilern, Wasserzählern, Wärmezählern oder dgl. Messgeräten oder Zählern, wird immer weiter automatisiert. Dazu werden Verbrauchs- und Sensordaten bspw. aus Heizkostenverteilern, anderen Verbrauchserfassungsgeräten oder allgemeiner aus Messgeräten bzw. Zählern häufig an Datensammler übertragen, welche die Messdaten bspw. gebäudezentral sammeln. Ein solcher Datensammler kann an einer zentralen Position fest installiert sein oder beispielsweise in einem Fahrzeug (Drive-By) oder durch einen Ableser (Walk-By) oder durch ein fernsteuerbares Fluggerät (Fly-By) in die Nähe der Erfassungsgeräte und/oder Zähler gebracht werden, um die von den Messgeräten ausgesandten Verbrauchs- und/oder Sensordaten zu empfangen.

Zur Übertragung und ggf. Weiterleitung dieser Gebäudeverbrauchs- und/oder Gebäudesensordaten in einem bspw. Gebäude-Sensornetzwerk werden heutzutage typischer Weise Funksysteme insbesondere in den SRD-Bändern (im Sub-Gigaherz-Bereich, wie etwa 868 MHz oder 434 MHz) genutzt. Um dabei eine Kompatibilität von Sendern und Empfängern verschiedener Hersteller zu gewährleisten, werden zur Funkübertragung standardisierte Telegramme verwendet. In einem derartigen Standard, wie bspw. dem OMS-Standard, ist derzeit nicht vorgesehen, Fehlerkorrekturdaten insbesondere für eine Forward-Error-Correction (FEC) mit zu übertragen.

Bekannte Verfahren zur Fehlerkorrektur mit einem FEC-Verfahren, wie bspw. ein Reed-Solomon-Verfahren, können dazu eingesetzt werden, eventuell auftretende Übertragungsfehler im übermittelten Telegramm nach dessen Empfang, bspw. direkt im Empfänger, zu korrigieren und so fehlerfreie Daten zu erhalten. Dies wird dadurch erreicht, dass die zu übertragenden Daten in redundanter Weise kodiert werden. Diese Verfahren eignen sich besonders für die Fehlerkorrektur in unidirektionalen Funksystemen.

In dem Aufsatz Kann Yu et. al., "A Flexible Error Correction Scheme for IEEE 802.15.4-based Industrial Wireless Sensor Networks" wird ein Verfahren zur Forward Error Correction (FEC) beschrieben, das die Fehlerkorrektur in Verbindung mit einer speziellen abschließenden Fehlerkorrektur dann einsetzt, wenn mittels einer Prüfsumme ein Übertragungsfehler festgestellt wurde. Die Fehlerkorrekturdaten (FEC-Bits) sind Bestandteil des vollständig zu empfangenden Telegramms. In einem solchen System kann eine Fehlerkorrektur nur innerhalb des verwendeten Standards realisiert werden.

In der WO 2015/074666 A1 wird ein Fehlerkorrekturverfahren für Telegramme beschrieben, die zwei Telegramm-Teile mit den Nutzdaten und daran angehängt mit Fehlerkorrekturdaten enthalten. Die Fehlerkorrekturdaten sind aber nur ein optionaler Telegrammteil, der empfangen werden kann, aber nicht empfangen werden muss. Dies wird dadurch erreicht, dass der erste Telegramm-Teil alleine einem Übertragungsstandard entspricht, so dass der erste Telegramm-Teil auch unabhängig von dem anderen Telegramm-Teil empfangen werden kann.

Die in der heutigen Praxis eingesetzten Standards zur Übermittlung von Verbrauchs-, Sensordaten oder Aktordaten in einem Gebäude mittels eines lokalen Gebäudefunknetzes sehen eine solche Fehlerkorrektur für die Telegramme aber nicht vor und können daher nur in einem begrenzten Abstand zwischen Empfänger und Sender zur fehlerfreien Übertragung eingesetzt werden. Soll mit einem derartigen Verfahren eine größere Übertragungsreichweite erreicht werden, müsste eine wesentlich höhere Sendeleistung verwendet werden. Dies ist allerdings oftmals nicht möglich, da es sich bei den Sendern meist um batteriebetriebene Einheiten handelt. Da deren Batteriekapazität aus Kostengründen meist gering ist, steht nur eine begrenzte Batterie- und damit Sendeleistung zur Verfügung, damit die angestrebte Lebensdauer der Mess- bzw. Verbrauchserfassungsgeräte zuverlässig erreicht werden kann. Die Höhe der Sendeleistung kann ferner auch durch regulatorische Vorgaben bspw. europäische Richtlinien eingeschränkt sein.

Die US 2014/0126580 A1 offenbart ein Verfahren nach dem Oberbegriff des Anspruchs 1.

Aufgabe der vorliegenden Erfindung ist es daher, ein Verfahren zu schaffen, mit dem eine Funkübertragung von Daten, insbesondere von Verbrauchs- oder Sensordaten in einem Gebäude mittels eines lokalen Gebäudefunknetzes, mittels eines standardkonformen Telegramms auch über größere Reichweiten ohne Informationsverlust möglich ist, wobei dieser definierte Standard ggf. kein Fehlerkorrekturverfahren vorsieht.

Die obige Aufgabe wird durch ein Verfahren mit den Merkmalen des Anspruchs 1 und Vorrichtungen mit den Merkmalen des Anspruchs 8 gelöst. Dabei ist insbesondere vorgesehen, dass zusätzlich zum standardkonformen Telegramm mindestens ein weiteres, nicht standardkonformes Telegramm versendet und empfangen wird, das einen Fehlerkorrekturdatensatz mit Fehlerkorrekturdaten zu den in dem standardkonformen Telegramm enthaltenen Daten beinhaltet, welche aufgrund einer Redundanz eine Fehlerkorrektur der Daten bei Übertragungsfehlern zulassen.

Durch die zusätzliche Versendung eines Telegramms mit Fehlerkorrekturdaten können die Vorteile der Fehlerkorrektur auch für die Funkübertragung nach einem Standard ohne Fehlerkorrektur genutzt werden, ohne dass der Standard selbst verändert werden muss. Natürlich kann das Verfahren in gleicher Weise verwendet werden, wenn der Standard eine Fehlerkorrektur vorsieht, diese aber nicht verwendet oder ergänzt werden soll. Es ist für die Anwendung der Fehlerkorrektur ausreichend, die zur Funkübertragung vorgesehenen Sender und Empfänger so einzurichten, dass das mindestens eine (und auch vorzugsweise genau eine) weitere Telegramm mit den Fehlerkorrekturdaten ausgesendet wird. Ergänzend wird der Empfänger dazu eingerichtet, im Falle eines Übertragungsfehlers in dem standardkonformen Telegramm auch das weitere Telegramm mit den Fehlerkorrekturdaten zu empfangen und die Fehlerkorrektur durchzuführen. So führt das erfindungsgemäße Verfahren zu einer höheren Fehlerrobustheit und damit zu einer größeren Reichweite der Übertragung. Es ist damit dementsprechend möglich, die Dichte der zur Ablesung genutzten Empfänger zu reduzieren, wodurch Kosten an der Verbrauchsstelle eingespart werden. Eine weitere Möglichkeit besteht darin, bei gleicher Reichweite die Sendeleistung zu reduzieren. Dies führt zu Kosteneinsparungen bei der Herstellung der als Sender eingesetzten Geräte, da beispielsweise die Kapazität der Batterie reduziert werden kann.

Ein besonderer Vorteil des erfindungsgemäß vorgeschlagenen Verfahrens besteht darin, dass trotz der Integration der Fehlerkorrektur in die erfindungsgemäß vorgeschlagene Datenübertragung die standardkonformen Telegramme nicht verändert werden. Dadurch bleibt die Datenübertragung bspw. im Rahmen der Verbrauchswerterfassung oder der Übertragung anderer Messdaten standardkonform, so dass auch andere Sende- und Empfangsgeräte in dem Übertragungssystem, bspw. dem Gebäude-Sensornetzwerk, weiter genutzt werden können. Der Vorteil der Fehlerkorrektur bleibt dann den Geräten vorbehalten, in denen das erfindungsgemäße Verfahren implementiert ist.

Erfindungsgemäß wird das mindestens eine weitere Telegramm zeitlich nach dem standardkonformen Telegramm versendet und entsprechend auch später empfangen. Damit kann am Empfänger nach Empfang des standardkonformen Telegramms entschieden werden, ob auch das weitere Telegramm mit den Fehlerkorrekturdaten empfangen werden muss. Sofern die Datenübertragung fehlerfrei stattgefunden hat, kann der Empfänger auf den Empfang verzichten.

Entsprechend wird erfindungsgemäß das mindestens eine weitere Telegramm, das nach dem standardkonformen Telegramm versendet wurde, nur empfangen, wenn im standardkonformen Telegramm ein Übertragungsfehler festgestellt wurde. Damit wird im Empfänger der Energieaufwand durch das zusätzliche Empfangen der Fehlerkorrekturdaten eingespart. Ist es aufgrund eines zu kurzen zeitlichen Abstandes der Sendezeitpunkte des standardkonformen Telegramms und des darauf folgenden weiteren Telegramm mit Fehlerkorrekturdaten eine Auswertung nicht möglich, ob ein Übertragungsfehler im standardkonformen Telegramm vorliegt, bevor das mindestens eine weitere Telegramm eintrifft, so wird das Telegramm vorsorglich empfangen. Das Telegramm kann zwischengespeichert werden und nach Beendigung der Überprüfung auf Übertragungsfehler gegebenenfalls ausgewertet oder sonst verworfen werden. In diesem Fall wird im Empfänger zumindest noch der Energieaufwand für die Durchführung der Auswertung gespart.

In einer bevorzugten Ausführungsform der Erfindung ist vorgesehen, dass das mindestens eine weitere Telegramm neben den eigentlichen Fehlerkorrekturdaten des Fehlerkorrekturdatensatzes auch eine Kennung enthält. Diese Kennung beinhaltet Informationen zur Durchführung der Fehlerkorrektur, wie etwa die Art der Fehlerkorrektur und/oder Parameter, die zur Durchführung der Fehlerkorrektur benötigt werden, und/oder Informationen, welche Bestandteile des Telegramms in die Berechnung der Fehlerkorrekturdaten einbezogen wurden. Damit kann die Fehlerkorrektur bzw. der Fehlerkorrekturdatensatz flexibel gestaltet werden und beispielsweise in Abhängigkeit der zu erzielenden Korrekturklasse unterschiedliche Längen aufweisen. Als Korrekturdatensatz können die Fehlerkorrekturdaten alleine oder die Kombination aus Fehlerkorrekturdaten und Kennung bezeichnet werden.

Mögliche Arten der Fehlerkorrektur beinhalten Bose-Chaudhuri-Hocquenghem-Codes (BCH), Reed-Solomon (RS) und andere systematische Codes zur Vorwärtsfehlerkorrektur (FEC). In systematischen Codes sind die Informationsbits in unveränderter Form Bestandteil des durch die Fehlerkorrektur erzeugten Code-Wortes, wodurch es möglich ist, bei einer fehlerfreien Übertragung die Daten ohne Durchführung der Fehlerkorrektur zu lesen. Dies ist im Hinblick auf eine rechenarme und damit stromsparende Dekodierung der empfangenen Funktelegramme von besonderer Bedeutung.

Es kann vorgesehen sein, in der Kennung nur eine Versionsnummer der Fehlerkorrektur zu übertragen, deren Bedeutung dem Empfänger des Telegramms bekannt ist. Der Empfänger kann bspw. eine Tabelle vorhalten, die für jede Versionsnummer die Art der Fehlerkorrektur, wie bspw. das verwendete Polynom, sämtliche zur Durchführung der Fehlerkorrektur benötigten Informationen enthält. Damit können mehrere Bytes bei der Übertragung der Kennung selbst gespart werden, weil nicht sämtliche Informationen in Klartext übertragen werden müssen.

Stehen dem Empfänger neben den eigentlichen Daten, also insbesondere den im Standard festgelegten Nutzdaten sowie ggf. weiteren herstellerspezifischen Daten, auch die Fehlerkorrekturdaten zur Verfügung, so ist es trotz Übertragungsfehler entweder in den Nutzdaten oder in den Fehlerkorrekturdaten möglich, das fehlerfreie standardkonforme Telegramm zu rekonstruieren. Dazu ist es allerdings nötig, dass dem Empfänger die Art der Fehlerkorrektur und die dafür benötigten Parameter bekannt sind.

Sofern diese Informationen erfindungsgemäß in der Kennung übertragen werden, wäre es nicht möglich, einen Fehler in der Kennung selbst zu beheben. Es ist deshalb in einer bevorzugten Ausführung der Erfindung vorgesehen, dass die Kennung eine eigene Fehlerkorrektur aufweist. Dazu sind in der Kennung eigene Kennungs-Fehlerkorrekturdaten vorgesehen. Wenn beispielsweise die auch als FEC-Header bezeichnete Kennung 1 Byte = 8 Bits umfasst, können 3 Bits für die eigentlichen Kennung und weitere 3 Bits für Kennungs-Fehlerkorrekturdaten vorgesehen sein. Diese Kennungs-Fehlerkorrekturdaten werden auch als FEC Parity Bits bezeichnet. Diese eigene Fehlerkorrektur der Kennung ist erfindungsgemäß vollständig unabhängig von der Fehlerkorrektur des übrigen Telegramms, insbesondere also der Nutzdaten. Dabei kann vorgesehen sein, die in der Kennung verwendete Fehlerkorrektur während der Nutzungsdauer des Verfahrens nicht zu verändern, damit alle Empfangssysteme davon ausgehen können, dass es nur einen Typ der Fehlerkorrektur in der Kennung gibt.

In einer Ausführungsform der Erfindung kann vorgesehen sein, die Daten verschlüsselt zu übermitteln. Dazu werden die zu übertragenden Daten in verschlüsselter Form im Telegramm übertragen. Die Fehlerkorrekturdaten werden vorzugsweise basierend auf den bereits verschlüsselten Daten bestimmt und selbst nicht mehr verschlüsselt. Dies ist nicht nötig, da es nicht möglich ist, die ursprünglichen Daten aus den Fehlerkorrekturdaten zu bestimmen, da diese nur die Daten in verschlüsselter Form rekonstruieren können. Auch die Kennung wird erfindungsgemäß nicht verschlüsselt, da am Empfänger Kennung und Fehlerkorrekturdaten vor der Entschlüsselung ausgewertet werden müssen, um vorab eine Fehlerkorrektur durchführen zu können, sofern ein Fehler bei der Funkübertragung aufgetreten ist.

In einer weiteren Ausführung der Erfindung ist vorgesehen, dass der definierte Standard das Einbetten von Prüfwerten in das Telegramm vorsieht, indem nach einem Datenblock mit Daten und/oder herstellerspezifischen Daten, welche zusammen auch als Nutzdaten bezeichnet werden, ein Prüfblock mit jeweils einem zugeordneten Prüfwert für den vorangegangenen Datenblock eingefügt wird. Dies kann auch für das weitere Telegramm mit dem Fehlerkorrekturdatensatz oder zumindest den Fehlerkorrekturdaten des Fehlerkorrekturdatensatzes gelten.

Ein Beispiel für das Einbetten von Prüfwerten in das Telegramm ist das Vorsehen von CRC-Blöcken in dem Standardtelegramm. Dabei ist nach einer bestimmten Anzahl von Bytes, die die eigentlichen zu übertragenden Daten (insbesondere Nutzdaten bzw. Payload) beinhalten, eine bestimmte Anzahl von CRC-Bytes als Prüfwert in einem Prüfblock vorgesehen, um eine sogenannte zyklische Redundanzprüfung durchzuführen. Damit kann am Empfänger erkannt werden, ob die Übertragung fehlerbehaftet ist oder nicht. So ist es möglich, eine Fehlerkorrektur mit den Fehlerkorrekturdaten nur dann durchzuführen, wenn ein Übertragungsfehler aufgetreten ist.

Telegramme zur Datenübertragung enthalten in ihrer Präambel typischer Weise ein Sync-Wort, das den Empfänger auf den Sendetakt des Senders synchronisiert, so dass nach diesem Sync-Wort die Übertragung der eigentlichen Daten (im Sinne der Nutzdaten) erfolgen kann. Dies gilt auch für das standardkonforme Telegramm.

Der Vorteil des beschriebenen Verfahrens liegt also darin, dass durch das erfindungsgemäß weitere Telegramm die Empfangbarkeit des standardkonformen Telegramms erhöht wird, indem für dieses Telegramm eine Fehlerkorrektur zur Verfügung gestellt wird, ohne den Standard zu verändern. So bleiben standardkonforme Telegramme für Empfänger, die nicht für die erfindungsgemäße Fehlerkorrektur eingerichtet sind, weiterhin im Rahmen des Standards ohne Fehlerkorrektur empfangbar.

Erfindungsgemäß wird mindestens ein weiteres Telegramm ohne Präambel und Sync-Wort gesendet. Der Empfänger behält dazu die Bit-Synchronisation während der kurzen Sendepause, in der Größenordnung bis maximal 10 Bitzeiten, zwischen standardkonformen Telegramm oder einem vorangegangenen weiteren Telegramm und dem weiteren Telegramm ohne Präambel. Die Bitzeit ist als die für die Übertragung eines Bits benötigte Zeit definiert.

Durch die Ersparnis der Präambel und des Sync-Worts reduziert sich der energetische Aufwand für die Fehlerkorrektur. Dies kann auch dann sinnvoll sein, wenn erfindungsgemäß mehrere weitere Telegramme für die Fehlerkorrektur gesendet werden. Grundsätzlich ist es natürlich auch möglich, sämtliche Daten für die Fehlerkorrektur in der beschriebenen Weise in nur einem weiteren Telegramm und ohne eine Präambel (und entsprechend ohne Sync-Wort) zu übertragen.

Erfindungsgemäß wird das mindestens eine weitere Telegramm in einem festen (im Sinne von definierten) zeitlichen Abstand zum standardkonformen Telegramm ausgesendet. Damit ist es besonders einfach, am Empfänger dem standardkonformen Telegramm das mindestens eine weitere Telegramm zuzuordnen. Der feste zeitliche Zusammenhang kann sich dabei auf den Anfang oder das Ende des standardkonformen Telegramms beziehen.

Besonders bevorzugt bezieht sich der zeitliche Abstand aber auf das Ende des standardkonformen Telegramms. Weist das standardkonforme Telegramm verschiedene Längen auf, kann so die Sendelücke dann besonders klein und vor allem immer gleich konzipiert werden.

Die Länge des zeitlichen Abstands respektive der Sendepause ist in der Praxis das Ergebnis einer Optimierungsaufgabe mit komplexen Zusammenhängen. Ist der Abstand kürzer als die Anschaltzeit des Funkchips, welcher in der Größenordnung vom 1 ms liegt, so ergibt sich ein energetischer Vorteil gegenüber einem langen Abstand, bei dem die Anschaltzeit investiert werden muss. Außerdem erhöht sich die Kollisionsrate mit zunehmendem Abstand, solange Telegramme von anderen Geräten nicht in die Abstandslücke hineinpassen. Damit ergibt sich, dass die Kollisionsrate proportional zur Länge der beiden Telegramm plus ihres zeitlichen Abstands (Sendepause) ist. Ab einer gewissen Größe der Abstandslücke nimmt die Kollisionsrate wieder ab. Je länger der zeitliche Abstand, desto länger muss der Empfänger warten bis das Telegramm vollständig bearbeitet werden kann, falls Übertragungsfehler vorliegen. Der Empfänger muss das zuerst empfangene Telegramm zwischenspeichern und kann die Fehlerkorrektur erst nach Empfang des zweiten Telegramms durchführen. Je länger der zeitliche Abstand ist, desto mehr Telegramme müssen im Mittel zwischengespeichert werden. Wird der zeitliche Abstand zu kurz gewählt, kann es sein, dass die Abarbeitung des ersten Telegramms noch nicht abgeschlossen ist, wenn das zweite Telegramm eintrifft. Vor diesem Hintergrund hat sich in der Praxis eine Sendepause in der Größenordnung zwischen 5 und 10 Bitzeiten als besonders vorteilhaft erwiesen.

Die Erfindung bezieht sich außerdem auf Vorrichtungen zur Funkübertragung von Daten mit einem Funksender, mit einem Datenspeicher zur Speicherung der zu übertragenden Daten und mit einer Recheneinheit, die dazu eingerichtet sind, entsprechend dem vorbeschriebenen Verfahren ein standardkonformes Telegramm und mindestens ein weiteres Telegramm zusammenzustellen und durch den Funksender zu versenden. Eine Vorrichtung zur Funkübertragung von Daten ist erfindungsgemäß auch mit einem Funkempfänger, mit einem Datenspeicher zur Speicherung der übertragenen Daten und mit einer Recheneinheit ausgestattet sein. Die Recheneinheit des Funkempfängers ist erfindungsgemäß dazu eingerichtet, entsprechend dem vorbeschriebenen Verfahren ein standardkonformes Telegramm und ein weiteres Telegramm zu empfangen und mit Hilfe des Fehlerkorrekturdatensatzes, d.h. der erfindungsgemäß vorgeschlagenen Fehlerkorrektur und insbesondere den Fehlerkorrekturdaten, mögliche Übertragungsfehler im Telegramm zu korrigieren.

Die Recheneinheit ist also dazu eingerichtet, das vorbeschriebene erfindungsgemäße Verfahren oder Teile davon durchzuführen.

Dazu kann eine als Funksender (nachfolgend auch einfach als Sender bezeichnet) ausgebildete Vorrichtung ein standardkonformes Telegramm aussenden. Dieser Sender kann erfindungsgemäß dazu eingerichtet sein, die Fehlerkorrekturdaten für dieses Telegramm zu erzeugen und in einem weiteren Telegramm zu versenden. Die erfindungsgemäße Vorrichtung kann außerdem als Funkempfänger (nachfolgend auch einfach als Empfänger bezeichnet) ausgebildet sein, der neben dem standardkonformen Telegramm auch das mindestens eine weitere Telegramm empfangen kann. Diese Vorrichtung ist dazu eingerichtet, mit Hilfe der Fehlerkorrekturdaten aus dem mindestens einen weiteren Telegramm Übertragungsfehler im standardkonformen Telegramm zu beheben.

Die Erfindung wird nachfolgend anhand von Ausführungsbeispielen und unter Bezugnahme auf die Figuren erläutert.
- Fig. 1: zeigt den Aufbau der Telegramme, wie sie bei einem nicht zur Erfindung gehörenden Verfahren verwendet werden, bei dem das zweite Telegramm ein Präambel mit Sync-Wort aufweist.
- Fig. 2: zeigt einen erfindungsgemäßen Aufbau der Telegramme gemäß einer Ausführungsform der Erfindung, wobei das zweite Telegramm keine Präambel und kein Sync-Wort aufweist.
- Fig. 3: zeigt eine erfindungsgemäße Kennung der Fehlerkorrektur mit eigenen Kennungs-Fehlerkorrekturdaten gemäß einer Ausführungsform der Erfindung.

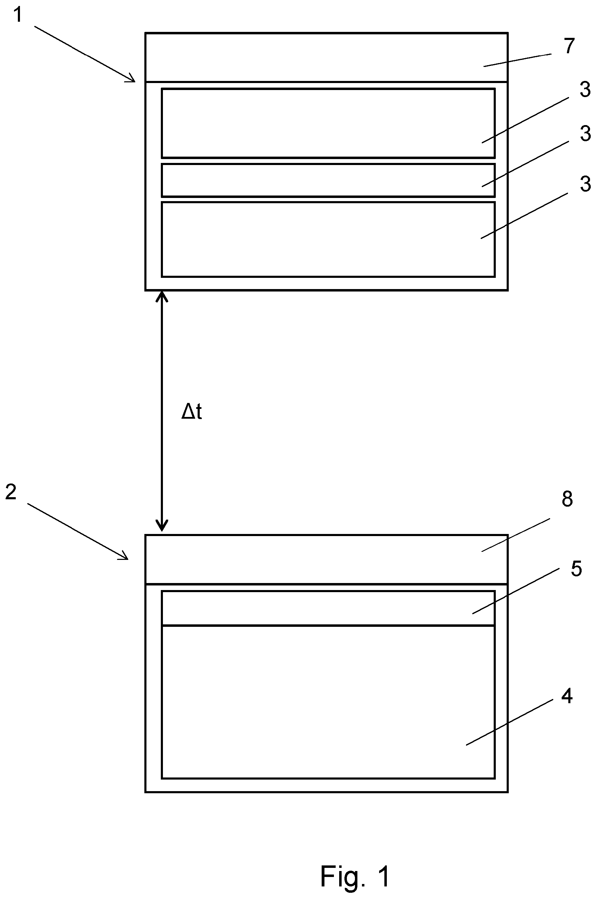

In Fig. 1 ist der Aufbau der Telegramme 1, 2 entsprechend einer nicht zur Erfindung gehörenden Ausführungsform schematisch aufgezeigt, wie sie in einem Verfahren ausgesendet werden können. Das standardkonforme Telegramm 1 weist eine Präambel mit Sync-Wort 7 und die einzelnen, im Standard festgelegten Daten 3 auf, die bspw. wie angedeutet in verschiedene Datenbereiche, bspw. einen Standarddatenbereich und einen proprietären Bereich zur Übertragung herstellerspezifischer Daten, aufgeteilt werden können . Ein weiteres, auch als Fehlerkorrekturtelegramm bezeichnetes Telegramm 2 besitzt (anders als bei der Erfuindung) eine Präambel mit einem eigenen Sync-Wort 8.

Im Fehlerkorrekturtelegramm 2 werden die Fehlerkorrekturdaten 4 übertragen. Das Fehlerkorrekturtelegramm 2 beinhaltet neben den eigentlichen Fehlerkorrekturdaten 6 auch eine Kennung 5. Mit dieser Kennung 5 wird eine Versionsnummer übertragen, mit der der Empfänger die zur Durchführung der Fehlerkorrektur nötigen Informationen erhält. Fehlerkorrekturdaten 4 und Kennung 5 werden zusammen auch als Fehlerkorrekturdatensatz bezeichnet.

Fig. 1 stellt außerdem von oben nach unten den zeitlichen Ablauf eines Verfahrens zur Funkübertragung der Daten 3, 4, 5 bspw. in einem lokalen Gebäudefunknetz dar. Bei den Daten kann es sich um Gebäudeverbrauchs-, Gebäudesensor- und/oder Gebäudeaktordaten 3, Fehlerkorrekturdaten 4 und/oder eine Kennung 5 der Fehlerkorrektur handeln.

Wie bei der Durchführung des erfindungsgemäßen Verfahrens wird in einem Sender zuerst das zu versendende standardkonforme Telegramm 1 mit der entsprechenden Präambel 7 (enthaltend das Sync-Wort) zusammengestellt. Dabei werden zuerst die Verbrauchs-, Sensor- und/oder andere Daten 3 für die im Standard vorgesehenen Datenpunkte des Telegramms 1 bereitgestellt. Daraufhin können diese Daten gegebenenfalls verschlüsselt werden. Diese Daten 3, 7 werden in das standardkonforme Telegramm eingestellt, wobei ggf. aus den Daten noch (nicht dargestellte) Prüfwerte berechnet und in dem DataLink-Layer des Übertragungsprotokolls (nach dem OSI-Schichtenmodell) mit eingebunden werden.

Als nächstes werden mit der designierten Methode zur Fehlerkorrektur die Fehlerkorrekturdaten 4 berechnet. Diese berücksichtigen sämtliche Daten 3, vorzugsweise bereits in verschlüsselter Form, sowie ggf. auch die Prüfwerte und/oder die Präambel 7. In diesem Fall werden die Fehlerkorrekturdaten 4 aus dem gesamten Telegramm 1 berechnet.

Die so erhaltenen Fehlerkorrekturdaten 4 werden im Fehlerkorrekturtelegramm 2 bereitgestellt. Gemeinsam mit den Fehlerkorrekturdaten 4 wird die Kennung 5, welche Informationen zur Durchführung der Fehlerkorrektur enthält, im Fehlerkorrekturtelegramm 2 bereitgestellt. Um sicherzustellen, dass die Kennung 5 übertragen werden kann, wird diese mit einer eigenen Fehlerkorrektur ausgestattet.

Die in Fig. 1 optional in das weitere Telegramm 2 (Fehlerkorrekturtelegramm) auch eingestellte Präambel 8 ist in dem erfindungsgemäßen Verfahren nicht vorgesehen.

Beide Telegramme 1, 2 werden mit einem definierten zeitlichen Abstand Δt zueinander ausgesendet.

Im Empfänger wird zuerst das standardkonforme Telegramm 1 empfangen und beispielsweise über eine zyklische Redundanzprüfung mit Hilfe von CRC-Bytes als Prüfwerten auf Übertragungsfehler überprüft. Ist bei der Übertragung des Telegramms 1 ein Fehler aufgetreten, wird auch das zweite Telegramm 2 mit den Fehlerkorrekturdaten 6 empfangen, bzw. die gegebenenfalls ohnehin empfangenen und zwischengespeicherten Signale werden ausgewertet.

Für die Fehlerkorrektur ist es im Vorfeld notwendig zu bestimmen, welche Fehlerkorrekturmethode verwendet wurde. Dazu muss die Kennung 5 mit den Informationen der Fehlerkorrektur ausgelesen werden. Falls ein Fehler in der Übertragung der Kennung 5 aufgetreten ist, so kann diese mit Hilfe der kennungseigenen Fehlerkorrektur wiederhergestellt werden. Damit sind dem Empfänger Art der Fehlerkorrektur, Position der Fehlerkorrekturdaten 4, sämtliche Parameter und alle anderen für die Fehlerkorrektur notwendigen Informationen bekannt. Daraufhin können am Empfänger die Fehlerkorrekturdaten 4, die sich im weiteren Telegramm 2 befinden, genutzt werden, um die Fehlerkorrektur durchzuführen. Überschreiten die Übertragungsfehler nicht ein ggf. vorhandenes Limit für die Anzahl maximaler Fehler bei einer Fehlerkorrektur, kann so das ursprüngliche, fehlerfreie standardkonforme Telegramm 1 rekonstruiert werden.

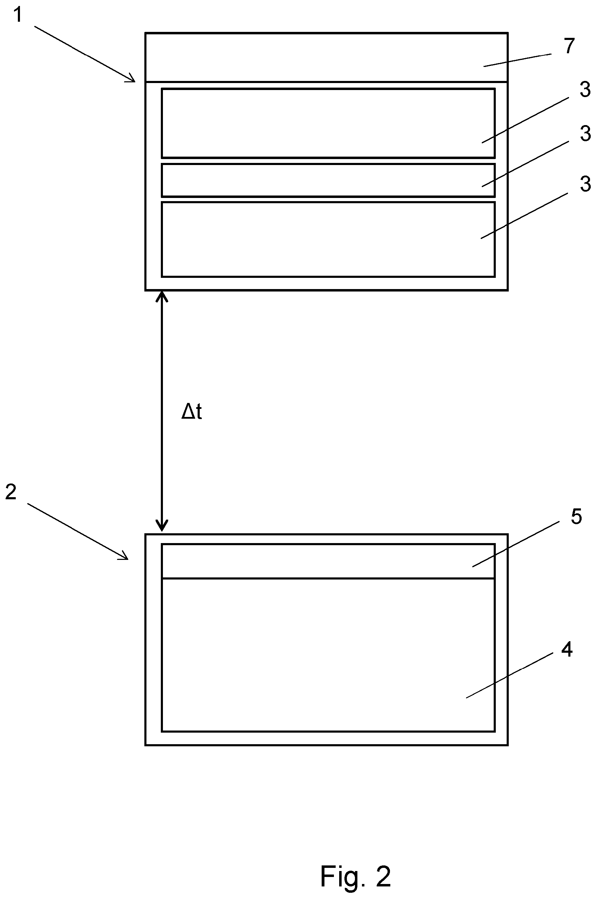

Fig. 2 zeigt den erfindungsgemäßen Aufbau der Telegramme 1, 2. Dabei wird das Fehlerkorrekturtelegramm 2 ohne eigene Präambel und Sync-Wort versendet. Zum Empfang dieser Telegramme behält der Empfänger nach Erhalt des standardkonformen Telegramms die Bit-Synchronisation aufrecht. Nach der dem Empfänger bekannten Zeit Δt kann dadurch auch das Fehlerkorrekturtelegramm 2 empfangen werden. Ansonsten entspricht das Vorgehen dem zuvor beschriebenen Fall.

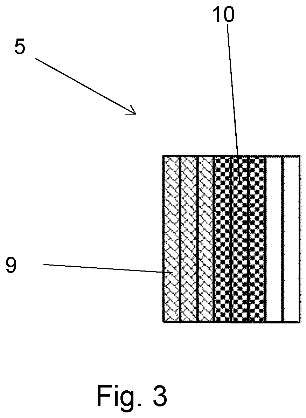

Für den Fall, dass für die Anwendung der erfindungsgemäß vorgeschlagen Fehlerkorrektur bei der Funkübertragung von Daten 3 eine Kennung 5 erforderlich ist, ist es sinnvoll, dass die Kennung 5 eigene Kennnungs-Fehlerkorrekturdaten 4 zur eigenständigen Fehlerkorrektur der Kennung 5 aufweist. Damit kann die Kennung 5 eigenständig korrigiert werden, wenn in der Kennung 5 ein Übertragungsfehler stattfindet. Eine entsprechende Kennung ist beispielhaft in Fig. 3 veranschaulicht.

Dort ist eine Kennung 5 mit insgesamt 8 Bits (d.h. ein Kennungs-Byte) mit Kennungsdaten 9 dargestellt, welche die Art der Fehlerkorrektur beschreiben, durch den Empfänger direkt auslesbar sind und die Informationen zur Durchführung der Fehlerkorrektur enthalten. Hierfür werden 3 Bits verwendet. Anschließend an die Kennungsdaten 9 sind die Kennungs-Fehlerkorrekturdaten 10 vorgesehen, welche auf Basis der Kennungsdaten 9 berechnet sind und in einem Fehlerfall aufgrund einer Redundanz die Rekonstruktion der Kennungsdaten 9 erlauben. Auch hierfür kann ein übliches FEC-Verfahren verwendet werden. Dieses ist erfindungsgemäß eindeutig vordefiniert und kann daher ohne weitere Parametrierung verwendet werden. In einer Gerätegeneration sollte dieses Verfahren nicht mehr geändert werden, so dass alle Geräte untereinander kompatibel sind. Auch für die Kennungs-Fehlerkorrekturdaten 10 sind 3 Bits vorgesehen.

Die restlichen, in Fig. 3 nicht gekennzeichneten Bits, können anderweitig verwendet werden, bspw. für einen Prüfwert zum Erkennen von Übertragungsfehlern, analog dem bereits beschriebenen Verfahren für CRC-Bytes. Damit ist die Kennung 5 in dem Telegramm 2 erfindungsgemäß völlig autark im Hinblick auf eine Erkennung und Behebung von Übertragungsfehlern.

### Bezugszeichenliste:

- 1: standardkonformes Telegramm
- 2: weiteres Telegramm
- 3: Daten
- 4: Fehlerkorrekturdaten
- 5: Kennung
- 7: Präambel mit Sync-Wort, Standard
- 8: Präambel mit Sync-Wort, Fehlerkorrektur (nicht Teil der Erfindung)
- 9: Kennungsdaten
- 10: Kennungs-Fehlerkorrekturdaten

- Δt: zeitlicher Abstand

## Patentansprüche

1. Verfahren zur Funkübertragung von Daten, wobei das Verfahren die folgenden Schritte umfasst:
Versenden der Daten in einem standardkonformen Telegramm (1) entsprechend einem definierten Standard durch einen Funksender zur Funkübertragung, wobei der Standard gemäß einem Protokoll für die Funkübertragung einschließlich der Festlegung der Telegramme definiert ist,
Versenden eines weiteren Telegramm (2) durch den Funksender, wobei das weitere Telegramm (2) einen Fehlerkorrekturdatensatz mit Fehlerkorrekturdaten (4) zu den in dem standardkonformen Telegramm (1) enthaltenen Daten (3) beinhaltet, welche aufgrund einer Redundanz eine Fehlerkorrektur der Daten (3) bei Übertragungsfehlern zulassen,
Empfangen der Daten in dem standardkonformen Telegramm (1) durch einen Funkempfänger zur Funkübertragung und Feststellen eines Übertragungsfehlers in dem empfangenen standardkonformen Telegramm (1) durch den Funkempfänger, wobei im Falle eines Übertragungsfehlers in dem standardkonformen Telegramm (1) ein Empfangen und Auswerten des weiteren Telegramms (2) mit den Fehlerkorrekturdaten (4) und Durchführen der Fehlerkorrektur durch den Funkempfänger erfolgt,
wobei
das Versenden des weiteren Telegramm (2) in einem definierten zeitlichen Abstand nach dem standardkonformen Telegramm (1) erfolgt, wobei das weitere Telegramm (2) ohne Präambel und ohne Sync-Wort, aber nach einer so kurzen Sendepause versendet wird, dass der Funkempfänger während der Sendepause die Bit-Synchronisierung nicht verliert, wobei die kurze Sendepause maximal 10 Bitzeiten beträgt und eine Bitzeit als die für die Übertragung eines Bits benötigte Zeit definiert ist, und
das Empfangen und Auswerten des weiteren Telegramms (2) nur erfolgt, wenn im standardkonformen Telegramm (1) ein Übertragungsfehler festgestellt wurde.

2. Verfahren zur Funkübertragung von Daten nach Anspruch 1, **dadurch gekennzeichnet, dass** das weitere Telegramm (2) eine Kennung (5) enthält, wobei die Kennung (5) Informationen zur Durchführung der Fehlerkorrektur enthält.

3. Verfahren zur Funkübertragung von Daten nach Anspruch 2 **dadurch gekennzeichnet, dass** die Kennung (5) eine eigene Fehlerkorrektur mit Kennungs-Fehlerkorrekturdaten (10) zur Korrektur der Kennung (5) enthält.

4. Verfahren zur Funkübertragung von Daten nach Anspruch 2 oder 3 **dadurch gekennzeichnet, dass** in der Kennung (5) eine Versionsnummer übertragen wird, anhand derer der Empfänger die Informationen zur Durchführung der Fehlerkorrektur ermitteln kann.

5. Verfahren zur Funkübertragung von Daten nach einem der vorhergehenden Ansprüche, **dadurch gekennzeichnet, dass** mindestens ein weiteres Telegramm (2) in einem definierten zeitlichen Abstand zu einem vorausgegangenen weiteren Telegramm (2) ausgesendet wird.

6. Verfahren zur Funkübertragung von Daten nach Anspruch 5, **dadurch gekennzeichnet, dass** der definierte zeitliche Abstand auf das Ende des vorausgegangenen weiteren Telegramms (2) bezogen wird.

7. Verfahren zur Funkübertragung von Daten nach Anspruch 1, **dadurch gekennzeichnet, dass** der definierte zeitliche Abstand auf das Ende des standardkonformen Telegramms (1) bezogen wird.

8. Vorrichtungen zur Funkübertragung von Daten umfassend
eine als Funksender ausgebildete erste Vorrichtung mit einem Datenspeicher zur Speicherung der zu übertragenden Daten und mit einer Recheneinheit des Funksenders, wobei die Recheneinheit des Funksenders dazu eingerichtet ist, ein standardkonformes Telegramm (1) und ein weiteres Telegramm (2) gemäß den Schritten des Versendens gemäß Anspruch 1 zusammenzustellen und durch den Funksender zu versenden,
eine als Funkempfänger ausgebildete zweite Vorrichtung mit einem Datenspeicher zur Speicherung der übertragenen Daten und mit einer Recheneinheit des Funkempfängers, wobei die Recheneinheit des Funkempfängers dazu eingerichtet ist, das standardkonforme Telegramm (1) und im Falle eines Übertragungsfehlers in dem standardkonformen Telegramm (1) das weitere Telegramm (2) gemäß den Schritten des Empfangens gemäß Anspruch 1 durch den Funkempfänger zu empfangen und auszuwerten.

## Claims

1. Method of radio transmission of data, wherein the method comprises the following steps:
sending the data in a standard-compliant telegram (1) according to a defined standard by a radio transmitter for radio transmission, wherein the standard is defined according to a protocol for radio transmission including specifying of the telegrams,
sending a further telegram (2) by the radio transmitter, wherein the further telegram (2) contains an error correction data set with error correction data (4) for the data (3) contained in the standard-compliant telegram (1), which error correction data (4) allow error correction of the data (3) in the event of transmission errors due to redundancy,
receiving the data in the standard-compliant telegram (1) by a radio receiver for radio transmission and detecting a transmission error in the received standard-compliant telegram (1) by the radio receiver, wherein, in the event of a transmission error in the standard-compliant telegram (1), the further telegram (2) is received and evaluated with the error correction data (4) and the error correction is carried out by the radio receiver,
wherein the further telegram (2) is sent at a defined time interval after the standard-compliant telegram (1), wherein the further telegram (2) is sent without a preamble and without a sync word, but after a transmission pause which is so short that the radio receiver does not lose bit synchronization during the transmission pause, wherein the short transmission pause is a maximum of 10 bit times and a bit time is defined as the time required for the transmission of a bit, and
the further telegram (2) is only received and evaluated if a transmission error was detected in the standard-compliant telegram (1).

2. Method for radio transmission of data according to claim 1, **characterized in that** the further telegram (2) contains an identifier (5), wherein the identifier (5) contains information for performing the error correction.

3. Method for radio transmission of data according to claim 2, **characterized in that** the identifier (5) contains its own error correction with identifier error correction data (10) for correcting the identifier (5).

4. Method for radio transmission of data according to claim 2 or 3, **characterized in that** a version number is transmitted in the identifier (5), based on which the receiver can determine the information for carrying out the error correction.

5. Method for radio transmission of data according to one of the preceding claims, **characterized in that** at least a further telegram (2) is transmitted at a defined time interval from a preceding further telegram (2).

6. Method for radio transmission of data according to claim 5, **characterized in that** the defined time interval is related to the end of the preceding further telegram (2).

7. Method for radio transmission of data according to claim 1, **characterized in that** the defined time interval is related to the end of the standard-compliant telegram (1).

8. Apparatus for the radio transmission of data having
a first apparatus designed as a radio transmitter with a data memory for storing the data to be transmitted and with a computing unit of the radio transmitter, wherein the computing unit of the radio transmitter is adapted to compile a standard-compliant telegram (1) and a further telegram (2) according to the steps of sending according to claim 1 and to send them by the radio transmitter,
a second apparatus designed as a radio receiver with a data memory for storing the transmitted data and with a computing unit of the radio receiver, wherein the computing unit of the radio receiver is adapted to receive and evaluate the standard-compliant telegram (1) and, in the event of a transmission error in the standard-compliant telegram (1), the further telegram (2) according to the steps of receiving according to claim 1 by the radio receiver.

## Revendications

1. Procédé de transmission radio de données, dans laquelle la méthode comprend les étapes suivantes :
envoi des données dans un télégramme conforme à la norme (1) selon une norme définie par un émetteur radio pour la transmission radio, la norme étant définie selon un protocole pour la transmission radio comprenant la spécification des télégrammes,
envoi d'un autre télégramme (2) par l'émetteur radio, dans lequel l'autre télégramme (2) contient un ensemble de données de correction d'erreur avec des données de correction d'erreur (4) pour les données (3) contenues dans le télégramme conforme à la norme (1), ces données de correction d'erreur (4) permettant de corriger les erreurs des données (3) en cas d'erreurs de transmission dues à la redondance,
réception des données du télégramme conforme à la norme (1) par un récepteur radio pour la transmission radio et détection d'une erreur de transmission dans le télégramme conforme à la norme reçu (1) par le récepteur radio, dans lequel, en cas d'erreur de transmission dans le télégramme conforme à la norme (1), le télégramme supplémentaire (2) est reçu et évalué avec les données de correction d'erreur (4) et la correction d'erreur est effectuée par le récepteur radio,
le télégramme supplémentaire (2) est envoyé à un intervalle de temps défini après le télégramme conforme à la norme (1), le télégramme supplémentaire (2) est envoyé sans préambule et sans mot de synchronisation, mais après une pause de transmission si courte que le récepteur radio ne perd pas la synchronisation des bits pendant la pause de transmission, la courte pause de transmission étant au maximum de 10 temps de bit et un temps de bit étant défini comme le temps nécessaire à la transmission d'un bit, et
le télégramme supplémentaire (2) n'est reçu et évalué que si une erreur de transmission a été détectée dans le télégramme conforme à la norme (1).

2. Procédé de transmission radio de données selon la revendication 1, **caractérisé en ce que** le télégramme supplémentaire (2) contient un identificateur (5), l'identificateur (5) contenant des informations pour effectuer la correction d'erreur.

3. Procédé de transmission radio de données selon la revendication 2, **caractérisé en ce que** l'identificateur (5) contient sa propre correction d'erreur avec des données de correction d'erreur de l'identificateur (10) pour corriger l'identificateur (5).

4. Procédé de transmission radio de données selon la revendication 2 ou 3, **caractérisé en ce qu'**un numéro de version est transmis dans l'identifiant (5), à partir duquel le récepteur peut déterminer les informations pour effectuer la correction d'erreur.

5. Procédé de transmission radio de données selon l'une des revendications précédentes, **caractérisé en ce qu'**au moins un télégramme supplémentaire (2) est transmis à un intervalle de temps défini à partir d'un télégramme supplémentaire précédent (2).

6. Procédé de transmission radio de données selon la revendication 5, **caractérisé en ce que** l'intervalle de temps défini est lié à la fin du télégramme supplémentaire précédent (2).

7. Procédé de transmission radio de données selon la revendication 1, **caractérisé en ce que** l'intervalle de temps défini est lié à la fin du télégramme conforme à la norme (1).

8. Appareil pour la transmission radio de données comprenant
un premier appareil conçu comme un émetteur radio avec une mémoire de données pour stocker les données à transmettre et avec une unité de calcul de l'émetteur radio, dans lequel l'unité de calcul de l'émetteur radio est adaptée pour compiler un télégramme conforme à la norme (1) et un autre télégramme (2) selon les étapes d'envoi selon la revendication 1 et pour les envoyer par l'émetteur radio,
un deuxième appareil conçu comme un récepteur radio avec une mémoire de données pour stocker les données transmises et avec une unité de calcul du récepteur radio, dans lequel l'unité de calcul du récepteur radio est adaptée pour recevoir et évaluer le télégramme conforme à la norme (1) et, en cas d'erreur de transmission dans le télégramme conforme à la norme (1), le télégramme supplémentaire (2) conformément aux étapes de réception selon la revendication 1 par le récepteur radio.
